# EUROPEAN PATENT SPECIFICATION

(11) **EP 0 701 891 B1**
(45) Date of publication and mention of the grant of the patent: **24.05.2000**
(21) Application number: 95113864.3
(22) Date of filing: 04.09.1995
(51) Int. Cl.: B29C 45/27, B23P 15/00

(54) **Method of making an injection molding nozzle**
Verfahren zur Herstellung einer Spritzgiessdüse
Procédé de fabrication d'une buse de moulage par injection

(30) Priority: 16.09.1994 CA 2132281
(43) Date of publication of application: 20.03.1996
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- EP-A- 0 546 555
- US-A- 4 355 460
- US-A- 4 403 405
- US-A- 4 771 164
- US-A- 5 052 100

## Description

### BACKGROUND OF THE INVENTION

This invention relates generally to injection molding and more particularly to a method of manufacturing an injection molding nozzle having an integral heating element in which both brazing and casting are carried out in a single heating cycle of a vacuum furnace.

Making an injection molding nozzle with an integral electrical heating element has many advantages such as improved heat transfer, reduced corrosion and longer operating life. It is well known to make such integral nozzles by first sealing the components together to form a space around a helical portion of an electrical heating element, usually by brazing in a vacuum furnace. The nozzle is then reinserted into the vacuum furnace to cast a conductive material such as copper into the sealed space around the helical portion of the heating element. In the previous methods, a conductive material such as a beryllium copper alloy was selected to have a lower melting temperature than the brazing material. Different variations of this method are described in the applicant's U.S. Patent Numbers 4,355,460 which issued October 26, 1982, 4,403,405 which issued September 13, 1983, and 4,771,164 which issued September 13, 1988. While these previous methods have many advantages, they all have the disadvantage that the sealing of the space around the helical portion of the heating element and the casting of the copper into this space are two separate steps requiring two different cycles of the vacuum furnace. Furthermore, in the past, integrally casting the heating element in the conductive material has improved the extremely critical factor of thermal conductivity by reducing air pockets in the nozzle around the heating element. It has now been found that thermal conductivity can be further improved by cooling the nozzle in a manner to provide unidirectional solidification of the conductive material from the bottom up to prevent the formation of voids due to shrinkage.

### SUMMARY OF THE INVENTION

Accordingly, it is an object of the present invention to at least partially overcome the disadvantages of the prior art by providing a method of manufacturing an injection molding nozzle in which both brazing to seal the space around the heating element and casting the conductive material into the sealed space are carried out in a single controlled cycle of a vacuum furnace.

It is a further object of the invention to provide a method of cooling the nozzle to produce unidirectional solidification of the conductive material in the space from the bottom.

To this end, in one of its aspects, the invention provides a method of manufacturing an integral heated injection molding nozzle having a rear end, a front end, an elongated inner core portion with a melt passage extending therethrough from the rear end, an outer collar portion encircling the inner core portion adjacent the rear end, an outer sleeve portion extending from the outer collar portion towards the front end, an electrical heating element with a helical portion wound around the inner core portion and a lead portion extending outwardly through the outer collar portion, a conductive portion extending around the helical portion of the heating element between the inner core portion and the outer sleeve portion, including the steps of forming an assembly by mounting an outer collar and the heating element onto an inner core, mounting an elongated outer sleeve in a position to form a space around the helical portion of the heating element between the outer sleeve and the inner core, applying brazing material to the joints between the inner core, the outer collar and the outer sleeve and brazing the assembly together in a substantially oxygen free atmosphere in a vacuum furnace to seal said space against leakage when the assembly is in an upright position with the front end directly above the rear end, casting a molten conductive material into said space with the assembly in the upright position in a substantially oxygen free atmosphere in a vacuum furnace to form the conductive portion integrally bonded with the inner core portion, outer collar portion, heating element and outer sleeve portion, and machining the cast nozzle to provide a desired shape and finish, having the improvement wherein the conductive material has a melting temperature higher than the melting temperature of the brazing material, the assembly is brazed together and the conductive material is cast into said space in a single controlled cycle of the vacuum furnace which includes first raising the temperature in the vacuum furnace to a first predetermined temperature above the melting temperature of the brazing material and below the melting temperature of the conductive material, lowering the temperature in the vacuum furnace to a second predetermined temperature below the solidification temperature of the brazing material, holding the second temperature for a sufficient period of time to braze the assembly together, and then raising the temperature in the vacuum furnace to a third predetermined temperature sufficiently above the melting temperature of the conductive material to cast the conductive material into said space around the helical portion of the heating element between the outer sleeve and the inner core without melting the brazing material.

Further objects and advantages of the invention will appear from the following description taken together with the accompanying drawings.

### BRIEF DESCRIPTION OF THE DRAWINGS

Figure 1 is an exploded sectional view showing how the components of an injection molding nozzle are assembled according to a preferred embodiment of the invention,

Figure 2 is a sectional view of an assembly of these components with an insulative cap according to a first embodiment of the invention in place for insertion into a vacuum furnace,

Figure 3 shows a batch of these assemblies in position for insertion into the vacuum furnace,

Figure 4 is a view from the rear end of a completed injection molding nozzle made according to the preferred embodiment of the invention,

Figure 5 is a view from the front end of the completed injection molding nozzle made according to the preferred embodiment of the invention,

Figure 6 is a sectional view along line 6-6 in Figures 4 and 5, and

Figure 7 is a sectional view of an assembly of these components with an insulative cap according to a second embodiment of the invention in place for insertion into a vacuum furnace.

### DETAILED DESCRIPTION OF THE INVENTION

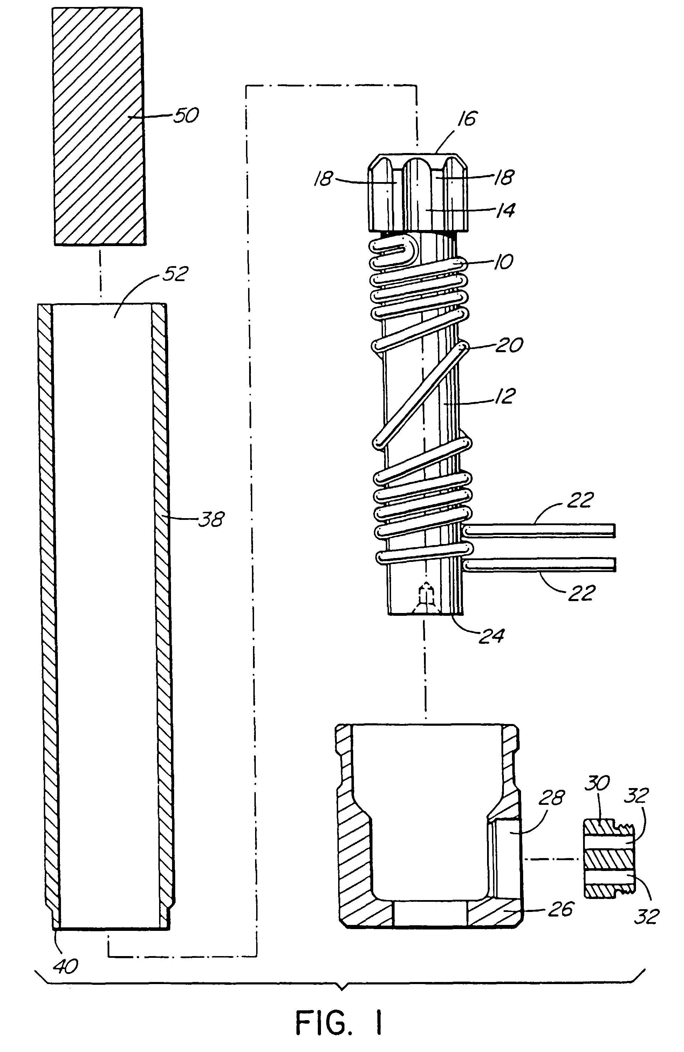

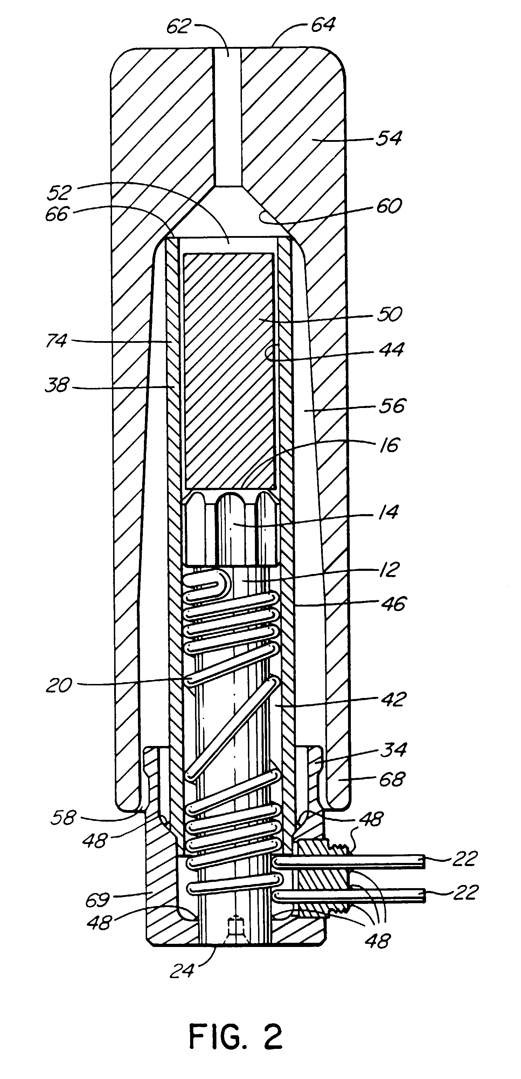

Reference is first made to Figures 1 and 2 to describe how the components of an injection molding nozzle with an integral electrical heating element are assembled according to the invention. An electrical heating element 10 is wound around an elongated inner core 12 formed of a suitable material such as hot work tool steel. In this embodiment, the inner core 12 has an enlarged head 14 at the upper end 16 (as shown) around which a number of spaced grooves 18 extend longitudinally to provide for the flow of molten conductive material therethrough, as described below. The electrical heating element 10 is wound with a helical portion 20 extending around the inner core 12 and two lead portions 22 extending outwardly near the lower end 24 of the inner core 12. The heating element 10 is wound with a predetermined configuration having fewer coils around the middle of the inner core 12 where there is less heat loss. In this embodiment, the heating element 10 has a fine coiled resistance wire extending through an electrically insulating material such as magnesium oxide powder in an outer steel casing. In other embodiments, other suitable types and configurations of heating elements can be used depending upon the thermal requirements of the application.

Next, a hollow outer collar 26 is mounted on the lower end 24 of the inner core 12 with the two lead portions 22 of the heating element 10 extending out through a radial opening 28 through the outer collar 26. A plug 30 having a pair of holes 32 to receive the lead portions 22 of the heating element 10 therethrough is then fitted into the radial opening 28. In this embodiment, the outer collar 26 has an insulative flange portion 34 which supports the completed nozzle 36 without excessive heat loss when it is mounted in a cold mold (not shown).

An elongated outer sleeve 38 made of a suitable protective material such as stainless steel is then mounted with its lower end 40 seated in the outer collar 26 to form a space 42 around the helical portion 20 of the heating element 10 between the inner core 12 and the surrounding outer sleeve 38. As best seen in Figure 2, in this embodiment, the outer sleeve 38 extends upwardly past the upper end 16 of the inner core 12 to form a cylindrical hopper 44 above the head 14 of the inner core 12. During mounting, the inner core 12, outer collar 26, plug 30 and outer sleeve 38 are tack welded in place with a laser to form an assembly 46.

A suitable brazing material such as a nickel alloy is then applied along the joints between the inner core 12, the heating element 10, plug 30 and outer sleeve 38 where indicated by reference numeral 48 in Figure 2. This is in the form of a bead along the outer joints and a powder along the inner joints. A slug of a suitable conductive material 50 is then loaded into the hopper 44 through its upper open mouth 52. In this embodiment, the conductive material 50 is substantially pure copper which has a melting temperature of about 1082°C (1980°F) which is substantially higher than the melting temperature of the nickel alloy brazing material 48 which is about 1010°C (1850°F). Other combinations of suitable materials can be used as long as the conductive material 50 has a melting temperature above the melting temperature of the brazing material 48, and the brazed seal is not remelted by the casting temperature. After the slug of conductive material 50 is loaded into the hopper 44, an elongated insulative cap 54 is mounted on the assembly 46. As clearly seen in Figure 2, in this embodiment, the insulative cap 54 has a tapered central opening 56 with a downwardly open mouth 58 through which the assembly 46 is received. The central opening 56 has a shoulder 60 which tapers inwardly to a small vent bore 62 which extends upwardly to the upper end 64 of the insulative cap 54. The insulative cap 54 is removably supported in this position by the tapered shoulder 60 resting on the upper end 66 of the outer sleeve 38. As can be seen, in this embodiment, the outer skirt 68 of the protective cap 54 extends downwardly around the flange portion 34 of the outer collar 26, leaving a lower portion 69 of the assembly 46 not covered by the insulative cap 54. In other embodiments, a greater or lesser portion or the entire assembly can be covered by the insulative cap 54 as required to produce unidirectional solidification of the conductive material 50, as discussed below. The reusable insulative cap 54 is preferably made of a suitable ceramic material, although it can also be made of other suitable materials such as stainless steel.

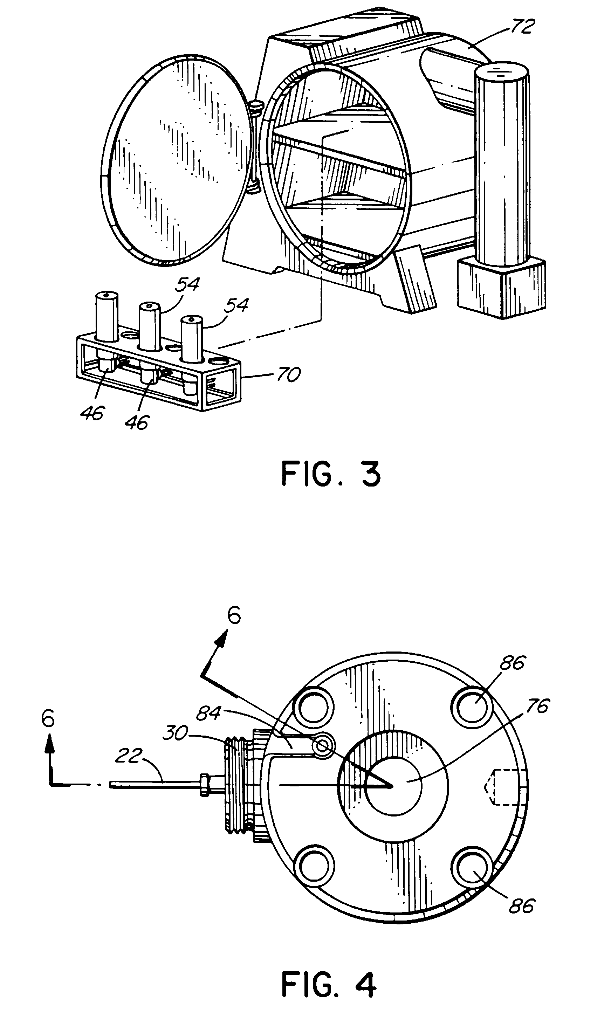

The assemblies 46, each sitting in a rack 70 in the upright position shown in Figure 3 and covered by an insulative cap 54, are then inserted in batches into a vacuum furnace 72. While each assembly 46 is shown having a separate cap 54, a common cap having different openings therein can be mounted on a number of assemblies in a batch. During a single controlled cycle of the vacuum furnace 72, as described below, each assembly 46 is first brazed together to seal the space 42 around the heating element 10 and then the conductive material 50 is cast into the space 42 to form an integral injection molding heated nozzle 36. As the furnace 72 is gradually heated it is evacuated to a relatively high vacuum to remove substantially all of the oxygen. The vent bores 62 in the insulative caps 54 ensure no oxygen is trapped inside the caps 54. The vacuum is then reduced by partially backfilling the furnace 72 with an inert gas such as argon or nitrogen to avoid sputtering. The furnace 72 is heated to a first temperature of approximately 1065°C (1950°F) which is above the melting point of the nickel alloy brazing material 48 and below the melting point of the copper conductive material 50. This melts the nickel alloy brazing material 48 which runs along the joints where it was applied between the heating element 10, inner core 12, plug 30, and outer sleeve 38. The temperature in the vacuum furnace is then lowered to a second temperature of approximately 982°C (1800°C) which is below the solidification temperature of the nickel alloy brazing material 48. This temperature is held for a sufficient period of time of approximately 30 minutes to braze the assembly 46 together to seal the space 42 around the helical portion 20 of the heating element 10 against leakage. This produces a type of diffusion braze with the steel along the joints which has a melting temperature even higher than the melting temperature of the copper conductive material 50.

The temperature in the vacuum furnace 72 is then raised to a third temperature of approximately 1113°C (2035°F) which is sufficiently above the melting temperature of the copper conductive material 50 to melt it, but not high enough to melt the diffusion brazes along the joints sealing the space 42. When the copper conductive material 50 melts, it flows downwardly from the hopper 44 through the spaced grooves 18 in the head 14 of the inner core 12 to fill the space 42 around the helical portion 20 of the heating element 10 between the inner core 12 and outer sleeve 38. As mentioned above, it is possible to cast the molten copper conductive material 50 into the space 42 without it leaking out through the brazed joints because the melting temperature of the brazes or the brazing material 48 along the joints is considerably higher after brazing than it was before. The controlled cycle of the vacuum furnace 72 is then completed by gradually cooling it down with a supply of inert gas such as nitrogen prior to removal of the integral cast nozzles 36. The insulative effect of the surrounding insulative cap 44 ensures that the copper conductive material 50 cools from the bottom up, thus producing unidirectional solidification from the bottom to the top. This avoids the formation of any voids due to shrinkage of the copper conductive material 50 during cooling and thus provides more efficient and uniform thermal conductivity from the heating element 10 to the melt flowing through the nozzle 36. Casting the copper conductive material 50 in a partial vacuum produces a metallurgical bonding of the copper conductive material 50 to the steel casing of the heating element 10 and the steel inner core 12, outer collar 26, and outer sleeve 38. Combined with the unidirectional solidification of the copper conductive material 50, this produces an integral injection molding heated nozzle 36 having very improved thermal characteristics.

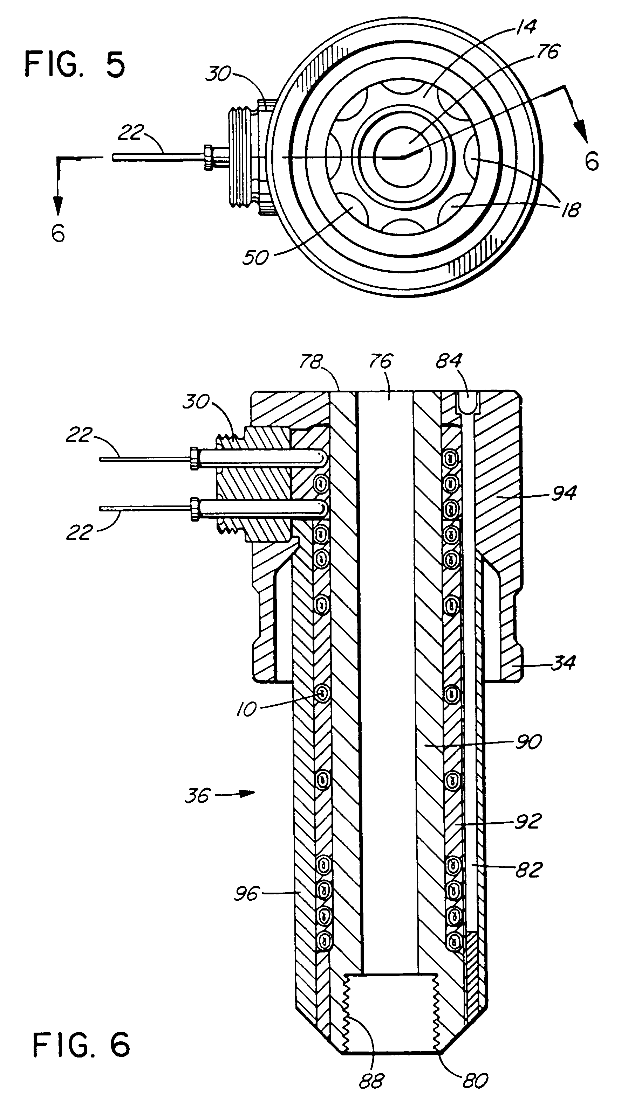

After removal from the vacuum furnace 72, each nozzle 36 is machined to remove the upper portion 74 of the outer sleeve 38 which forms the hopper 44, and provide the completed nozzle 36 with a clean finish. As seen in Figure 6, the nozzle is also drilled to provide a central melt bore 76 extending therethrough from the rear end 78 to the front end 80 and to form a thermocouple element bore 82 extending forwardly from a groove 84 in the rear end 78. Threaded holes 86 are also provided in the rear end 78 to receive mounting screws. While the front end 80 of the nozzle 36 has been machined in this embodiment to form a cylindrical seat 88 to receive a gate insert (not shown), in other embodiments it can be machined to provide for various other gating configurations. As seen in Figure 5, the completed nozzle 36 has an inner core portion 90 through which the central melt bore 76 extends. The conductive portion 92 formed by the copper conductive material 50 is integrally bonded around the inner core portion 90 as well as to the heating element 10, the outer collar portion 94 with the plug 30 and the outer sleeve portion 96. The copper conductive material 50 also integrally fills the grooves 18 around the head 14 of the inner core 12 which improves the thermal conductivity near the front end 80 of the nozzle.

In use, the heated nozzle 36 is mounted in a cooled mold and melt flows through the central melt bore 76 to a gate leading to a cavity. While the use is the same as existing injection molding heated nozzles, the thermal performance of nozzles manufactured according to the present invention is considerably improved.

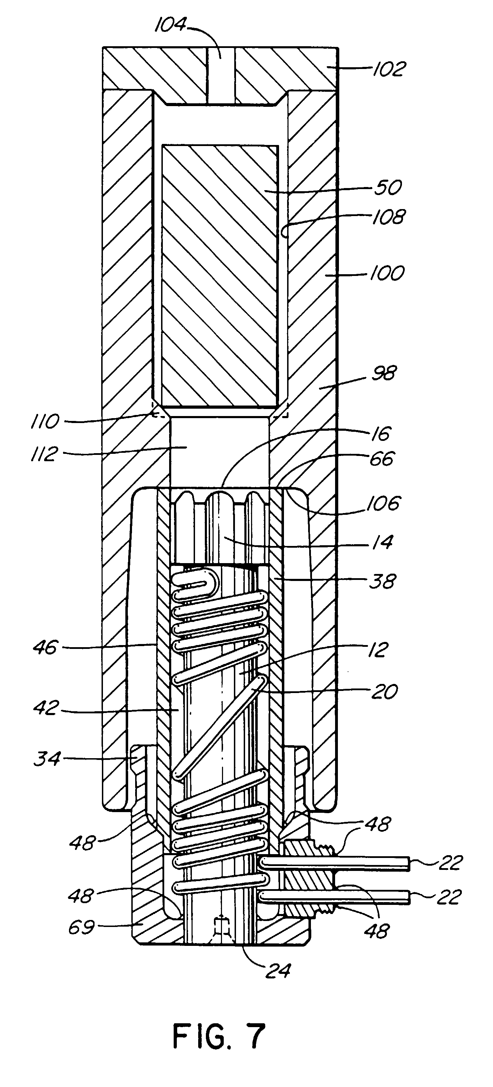

Reference is now made to Figure 7 which shows the insulative cap 98 having a different structure which is used in this embodiment of the invention. As most of the elements are the same as those described above, elements common to both embodiments are described and illustrated using the same reference numerals. In this embodiment, the insulative cap 98 has an elongated hollow outer portion 100 with a lid 102 through which a vent bore 104 extends. The outer portion 100 has an inwardly extending shoulder 106 which sits on the upper end 66 of the outer sleeve 38. As can be seen, in this case the insulative cap 98 rather than the outer sleeve 38 forms a hopper 108 into which the slug of copper 50 is inserted prior to insertion into the vacuum furnace 72. The slug of copper 50 rests on inwardly tapered ribs 110 to ensure proper venting of the space 112 beneath the slug of copper 50. Otherwise, the method of manufacture is the same as that described above except that there is no upper portion of the outer sleeve 38 which has to be removed after casting. The insulative cap 98 is merely removed and the nozzle 36 machined to provide the necessary finish. The insulative cap 98 is preferably made of ceramic and can be sprayed so the molten copper will not stick to it to facilitate reuse.

While the description of the method of manufacturing a heated injection molding nozzle 36 according to the invention has been given with respect to preferred embodiments, it will be evident that various other modifications are possible without departing from the scope of the invention as defined in the following claims.

## Claims

1. A method of manufacturing an integral heated injection molding nozzle (36) having a rear end (78), a front end (80), an elongated inner core portion (12) with a melt passage (76) extending therethrough from the rear end (78), an outer collar portion (26) encircling the inner core portion (12) adjacent the rear end (78), an outer sleeve portion (38) extending from the outer collar portion (26) towards the front end (80), an electrical heating element (10) with a helical portion (20) wound around the inner core portion (12) and a lead portion (22) extending outwardly through the outer collar portion (26), a conductive portion (92) extending around the helical portion (20) of the heating element (10) between the inner core portion (12) and the outer sleeve portion (38), including the steps of forming an assembly (46) by mounting an outer collar (26) and the heating element (10) onto an inner core (12), mounting an elongated outer sleeve (38) in a position to form a space (42) around the helical portion (20) of the heating element (10) between the outer sleeve (38) and the inner core (12), applying brazing material (48) to the joints between the inner core (12), the outer collar (26) and the outer sleeve (38) and brazing the assembly (46) together in a substantially oxygen free atmosphere in a vacuum furnace (72) to seal said space (42) against leakage when the assembly (46) is in an upright position with the front end (80) directly above the rear end (78), casting a molten conductive material (50) into said space (42) with the assembly (46) in the upright position in a substantially oxygen free atmosphere in a vacuum furnace (72) to form the conductive portion (92) integrally bonded with the inner core portion (12), outer collar portion (26), heating element (10) and outer sleeve portion (38), and machining the cast nozzle (36) to provide a desired shape and finish, characterized in that
the conductive material (50) has a melting temperature higher than the melting temperature of the brazing material (48), the assembly (46) is brazed together and the conductive material (50) is cast into said space (42) in a single controlled cycle of the vacuum furnace (72) which includes first raising the temperature in the vacuum furnace (72) to a first predetermined temperature above the melting temperature of the brazing material (48) and below the melting temperature of the conductive material (50), lowering the temperature in the vacuum furnace (72) to a second predetermined temperature below the solidification temperature of the brazing material (48), holding the second temperature for a sufficient period of time to braze the assembly (46) together, and then raising the temperature in the vacuum furnace (72) to a third predetermined temperature sufficiently above the melting temperature of the conductive material (50) to cast the conductive material (50) into said space (42) around the helical portion (20) of the heating element (10) between the outer sleeve (38) and the inner core (12) without melting the brazing material (48).

2. A method of manufacturing an injection molding nozzle (36) as claimed in claim 1 wherein the controlled cycle of the vacuum furnace (72) further includes the step of gradually cooling the vacuum furnace (72) with a supply of inert gas prior to removal of the cast nozzle (36).

3. A method of manufacturing an injection molding nozzle (36) as claimed in claim 2 further including placing an insulative cap (54) having an elongated opening (56) with a downwardly open mouth (58) over the assembly (46) during the heating cycle in the vacuum furnace (72) with the assembly (46) extending upwardly into the opening (56), whereby the conductive material (50) cools progressively upwardly.

4. A method of manufacturing an injection molding nozzle (36) as claimed in claim 3 wherein a predetermined portion of the assembly (46) extends upwardly into the opening in the insulative cap (54).

5. A method of manufacturing an injection molding nozzle as claimed in claim 4 wherein the outer sleeve (38) extends upwardly past the front end (80) in the upright position to an upper end to form a hopper (44), and loading a predetermined quantity of the conductive material (50) into the hopper (44) prior to insertion of the assembly (46) into the vacuum furnace (72), whereby during casting in the vacuum furnace (72) the conductive material (50) melts and runs down into said space (42) around the helical portion (20) of the heating element (10) between the outer sleeve (38) and the inner core (12).

6. A method of manufacturing an injection molding nozzle (36) as claimed in claim 5 wherein the insulative cap (54) is removably supported with a portion of the assembly (46) received in the opening (56) by contact against the upper end (66) of the outer sleeve (38).

7. A method of manufacturing an injection molding nozzle (36) as claimed in claim 6 wherein the insulative cap (54) has a vent bore (62) extending upwardly from the opening (56) in which the assembly (46) is received.

8. A method of manufacturing an injection molding nozzle (36) as claimed in claim 7 including attaching the inner core (12), the outer collar (26) and the outer sleeve (38) together by tack welding prior to brazing.

9. A method of manufacturing an injection molding nozzle (36) as claimed in claim 8 wherein the conductive material (50) is copper.

10. A method of manufacturing an injection molding nozzle (36) as claimed in claim 9 wherein the brazing material (48) is a nickel alloy.

## Patentansprüche

1. Ein Verfahren zum Herstellen einer integral beheizten Spritzgießdüse (36) mit einem hinteren Ende (78), einem vorderen Ende (80), einem länglichen inneren Kernabschnitt (12) mit einem Schmelzedurchgang (76), der sich dadurch hindurch vom hinteren Ende (78) her erstreckt, einem äußeren Hülsenabschnitt (26), der den inneren Kernabschnitt (12) angrenzend an das hintere Ende (78) umgibt, einem äußeren Buchsenabschnitt (38), der sich vom äußeren Hülsenabschnitt (26) in Richtung zum vorderen Ende (80) hin erstreckt, einem elektrischen Heizelement (10) mit einem schraubenförmigen Abschnitt (20), der um den inneren Kernabschnitt (12) herumgewunden ist, und einen Zuleitungsabschnitt (22), der sich nach außen durch den äußeren Hülsenabschnitt (26) erstreckt, einem leitenden Abschnitt (92), der sich um den schraubenförmigen Abschnitt (20) des Heizelementes (10) zwischen dem inneren Kernabschnitt (12) und dem äußeren Buchsenabschnitt (38) erstreckt, aufweist, mit den Schritten des Formens einer Anordnung (46) durch Anbringen einer äußeren Hülse (26) und des Heizelementes (10) auf einen inneren Kern (12), Anbringen einer länglichen äußeren Buchse (38) in einer Stellung, um einen Raum (42) um den schraubenförmigen Abschnitt (20) des Heizelementes (10) zwischen der äußeren Buchse (38) und dem inneren Kern (12) zu bilden, Aufbringen von Hartlötmaterial (48) zu den Verbindungen zwischen dem inneren Kern (12), der äußeren Hülse (26) und der äußeren Buchse (38) und durch Zusammenlöten der Anordnung (46) in einer im wesentlichen sauerstoffreien Atmosphäre in einem Vakuumofen (72), um den Raum (42) gegen Leckage abzudichten, wenn die Anordnung (46) sich in einer aufrechten Stellung befindet, wobei das vordere Ende (80) direkt über dem hinteren Ende (78) angeordnet ist, Gießen eines geschmolzenen leitenden Materiales (50) in den Raum (42), wobei sich die Anordnung (46) in der aufrechten Stellung in einer im wesentlichen sauerstoffreien Atmosphäre in einem Vakuumofen (72) befindet, um den leitenden Abschnitt (92) integral mit dem inneren Kernabschnitt (12), dem äußeren Hülsenabschnitt (26), dem Heizelement (10) und dem äußeren Buchsenabschnitt (38) zu verbinden, und Bearbeiten der gegossenen Düse (36), um eine gewünschte Form und Finish zu erhalten, **dadurch gekennzeichnet**, daß
das leitende Material (50) eine Schmelztemperatur aufweist, die höher ist als die Schmelztemperatur des Hartlötmaterials (48), die Anordnung (46) zusammengelötet ist und das leitende Material (50) in den Raum (42) in einen einzigen gesteuerten Zyklus des Vakuumofens (72) gegossen wird, wobei der Zyklus zuerst das Anheben der Temperatur in dem Vakuumofen (72) auf eine erste vorbestimmte Temperatur oberhalb der Schmelztemperatur des Hartlötmateriales (48) und unterhalb der Schmelztemperatur des leitenden Materiales (50) umfaßt, Erniedrigen der Temperatur in dem Vakuumofen (72) auf eine zweite vorbestimmte Temperatur unterhalb der Verfestigungstemperatur des Hartlötmateriales (48), Halten der zweiten Temperatur für einen ausreichend langen Zeitraum, um die Anordnung (46) zusammenzulöten, und dann Anheben der Temperatur in dem Vakuumofen (72) auf eine dritte vorbestimmte Temperatur, die genügend oberhalb der Schmelztemperatur des leitenden Materiales (50) liegt, um das leitende Material (50) in den Raum (42) um den schraubenförmigen Abschnitt (20) des Heizelementes (10) zwischen der äußeren Buchse (38) und dem inneren Kern (12) zu gießen, ohne das Hartlötmaterial (48) aufzuschmelzen.

2. Ein Verfahren zum Herstellen einer Spritzgießdüse (36) nach Anspruch 1, wobei der gesteuerte Zyklus des Vakuumofens (72) darüber hinaus den Schritt des graduellen Kühlens des Vakuumofens (72) bei einer Zufuhr von Schutzgas vor dem Herausnehmen der gegossenen Düse (36) umfaßt.

3. Ein Verfahren zum Herstellen einer Spritzgießdüse (36) nach Anspruch 2, darüber hinaus umfassend das Anbringen einer Isolierkappe (54), die eine längliche Öffnung (56) aufweist, wobei eine nach unten offene Mündung (58) über die Anordnung (46) während der Heizzyklen in dem Vakuumofen (72) gestülpt wird, und sich die Anordnung (46) nach oben in die Öffnung (56) erstreckt, wodurch das leitende Material (50) fortschreitend nach oben abkühlt.

4. Ein Verfahren zum Herstellen einer Spritzgießdüse (36) nach Anspruch 3, wobei ein vorherbestimmter Abschnitt der Anordnung (46) sich nach oben in die Öffnung der Isolierkappe (54) hinein erstreckt.

5. Ein Verfahren zum Herstellen einer Spritzgießdüse nach Anspruch 4, wobei sich die äußere Buchse (38) nach oben über das vordere Ende (80) in einer aufrechten Stellung hinaus zu einem oberen Ende erstreckt, um einen Fülltrichter (44) zu bilden und eine vorbestimmte Menge des leitenden Materiales (50) in den Fülltrichter (44) vor dem Einsetzen der Anordnung (46) in den Vakuumofen (72) geladen wird, wodurch während des Gießens in dem Vakuumofen (72) das leitende Material (50) schmilzt und nach unten in den Raum (42) um den schraubenförmigen Abschnitt (20) des Heizelementes (10) zwischen der äußeren Buchse (38) und dem inneren Kern (12) hineinläuft.

6. Ein Verfahren zum Herstellen einer Spritzgießdüse (36) nach Anspruch 5, wobei die Isolierkappe (54) abnehmbar gelagert ist, mit einem Abschnitt der Anordnung (46) in der Öffnung (56) durch Kontakt gegen das obere Ende (66) der äußeren Buchse (38) aufgenommen wird.

7. Ein Verfahren zum Herstellen einer Spritzgießdüse (36) nach Anspruch 6, wobei die Isolierkappe (54) eine Belüftungsbohrung (62) aufweist, die sich nach oben von der Öffnung (56) aus erstreckt, in welcher die Anordnung (46) aufgenommen ist.

8. Ein Verfahren zum Herstellen einer Spritzgießdüse (36) nach Anspruch 7, beinhaltend das Befestigen des inneren Kerns (12), der äußeren Hülse (26) und der äußeren Buchse (38) durch Heftschweißen miteinander, vor dem Löten.

9. Ein Verfahren zum Herstellen einer Spritzgießdüse (36) nach Anspruch 8, wobei das leitende Material (50) Kupfer ist.

10. Ein Verfahren zum Herstellen einer Spritzgießdüse (36) nach Anspruch 9, bei dem das Hartlötmaterial eine Nickellegierung ist.

## Revendications

1. Un procédé de fabrication d'une buse de moulage par injection (36) à chauffage dans la masse, ayant une extrémité arrière (78), une extrémité avant (80), une partie de noyau intérieur (12) allongée avec un passage de produit fondu (76) s'étendant à travers lui depuis l'extrémité arrière (78), une partie de collerette extérieure (26) encerclant la partie de noyau intérieur (12) au voisinage de l'extrémité arrière (78), une partie de douille extérieure (38) s'étendant depuis la partie de collerette extérieure (26) vers l'extrémité avant (80), un élément de chauffage électrique (10) avec une partie hélicoïdale (20), enroulée autour de la partie de noyau intérieur (10), et une partie conductrice (22), s'étendant vers l'extérieur en passant par la partie de collerette extérieure (26), une partie conductrice (42) s'étendant autour de la partie hélicoïdale (20) d'élément chauffant (10) entre la partie de noyau intérieur (12) et la partie de douille extérieure (38), y compris les étapes de formation d'un ensemble (46), en montant une collerette extérieure (26) et l'élément chauffant (10) sur un noyau intérieur (12), en montant une douille extérieure (38) allongée en une position pour former un espace (42) autour de la partie hélicoïdale (20) de l'élément chauffant (10) entre la douille extérieure (38) et le noyau intérieur (12), en appliquant un matériau de brasure (48) aux joints entre le noyau intérieur (12), la collerette extérieure (26) et la douille extérieure (38) et en brasant l'ensemble (46) conjointement dans une atmosphère pratiquement exempte d'oxygène, dans un four à vide (72) pour isoler de façon étanche ledit espace (42) contre toute fuite lorsque l'ensemble (46) est en position verticale montante, l'extrémité avant (80) étant placée directement au-dessus de l'extrémité arrière (78), le moulage d'un matériau conducteur (50) fondu dans ledit espace (42) l'ensemble (46) étant placé dans la position dressée dans une atmosphère pratiquement exempte d'oxygène dans un four à vide (72), pour former la partie conductrice (42), reliée d'une seule pièce à la partie de noyau intérieur (12), à la partie de collerette extérieure (26), à l'élément chauffant (10) et à la partie de douille extérieure (38), et en usinant la buse moulée (76) pour lui donner la forme et le fini souhaités, caractérisé en ce que
le matériau conducteur (50) a une température de fusion supérieure à la température de fusion du matériau de brasage (48), l'ensemble (46) est brasé conjointement et le matériau conducteur (50) est moulé dans ledit espace (42), dans un cycle commandé unique du four à vide (72), comprenant premièrement l'augmentation de la température dans le four à vide (72), à une première température prédéterminée supérieure à la température de fusion du matériau de brasage (48) et inférieure à la température de fusion du matériau conducteur (50), l'abaissement de la température dans le four à vide (72) à une deuxième température prédéterminée, inférieure à la température de solidification du matériau de brasage (48), le maintien de la deuxième température pendant une période de temps suffisante pour braser conjointement l'ensemble (46), puis augmentation de la température dans le four à vide (72), à une troisième température prédéterminée, suffisamment supérieure à la température de fusion du matériau conducteur (50) pour mouler le matériau conducteur (50) dans ledit espace (42) autour de la partie hélicoïdale (20) de l'élément de chauffage (10), entre la douille extérieure (32) et le noyau intérieur (12), sans faire fondre le matériau de brasage (48).

2. Un procédé de fabrication d'une buse de moulage par injection (36) selon la revendication 1, dans lequel le cycle commandé du four à vide (72) comprend, en outre, l'étape de refroidissement graduelle du four à vide (72) par une fourniture de gaz inerte, avant l'enlèvement de la buse moulée (36).

3. Un procédé de fabrication d'une buse de moulage par injection (36) selon la revendication 2, comprenant en outre le placement d'un capuchon isolant (54) ayant une ouverture allongée (56) dotée d'une embouchure (58) ouverte vers le bas sur l'ensemble (46) durant le cycle de chauffage dans le four à vide (72), l'ensemble (46) s'étendant vers le haut dans l'ouverture (56), de manière que le matériau conducteur (50) se refroidisse progressivement vers le haut.

4. Un procédé de fabrication d'une buse de moulage par injection (36) selon la revendication 3, dans lequel une partie prédéterminée de l'ensemble (46) s'étend vers le haut dans l'ouverture du capuchon isolant (54).

5. Un procédé de fabrication d'une buse de moulage par injection selon la revendication 4, dans lequel la douille extérieure (38) s'étend vers le haut au-delà de l'extrémité avant (80), dans la position dressée, vers une extrémité supérieure pour former une trémie (64) et le chargement d'une quantité prédéterminée du matériau conducteur (50) dans la trémie (64) avant l'insertion de l'ensemble (46) dans le four à vide (72), de manière que, lors de la coulée dans le four à vide (72), le matériau conducteur (50) fonde et descende dans ledit espace (42) se trouvant autour de la partie hélicoïdale (20) de l'élément de chauffage (10) entre la douille extérieure (38) et le noyau intérieur (12).

6. Un procédé de fabrication d'une buse de moulage par injection (36) selon la revendication 5, dans lequel le capuchon isolant (54) est supporté de façon amovible par une partie de l'ensemble (46) logée dans l'ouverture (56), par un contact contre l'extrémité supérieure (66) de la douille extérieure (38).

7. Un procédé de fabrication d'une buse de moulage par injection (36) selon la revendication 6, dans lequel le capuchon isolant (56) a un trou d'évent (62) s'étendant vers le haut depuis l'ouverture (56) dans laquelle l'ensemble (46) est logé.

8. Un procédé de fabrication d'une buse de moulage par injection (36) selon la revendication 7, comprenant la fixation du noyau intérieur (12), de la collerette extérieure (26) et de la douille extérieure (38), conjointement, par un soudage par point avant le brasage.

9. Un procédé de fabrication d'une buse de moulage par injection (36) selon la revendication 8, dans lequel le matériau conducteur (50) est du cuivre.

10. Un procédé de fabrication d'une buse de moulage par injection (36) selon la revendication 9, dans lequel le matériau de brasage (48) est un alliage de nickel.
